# EUROPÄISCHE PATENTSCHRIFT

(11) **EP 2 038 360 B1**
(45) Veröffentlichungstag und Bekanntmachung des Hinweises auf die Patenterteilung: **31.03.2010**
(21) Anmeldenummer: 07786957.6
(22) Anmeldetag: 29.06.2007
(51) Int. Cl.: C09J 175/06, C08G 18/48, C08G 18/76, C08G 18/12, C08G 18/42

(54) **FEUCHTIGKEITSREAKTIVER SCHMELZKLEBSTOFF MIT ERHÖHTER OFFENZEIT**
HUMIDITY REACTIVE HOT MELT ADHESIVE WITH INCREASED OPEN TIME
COLLE À CHAUD RÉACTIVE À L'HUMIDITÉ AVEC TEMPS DE PLEINE OUVERTURE ACCRU

(30) Priorität: 30.06.2006 EP 06116413
(43) Veröffentlichungstag der Anmeldung: 25.03.2009
(73) Patentinhaber: Sika Technology AG, 6340 Baar (CH)
(72) Erfinder: ONUOHA, Ukiwo, CH-8303 Bassersdorf (CH)
(74) Vertreter: Isler, Jörg
(86) Internationale Anmeldenummer: PCT/EP2007/056600
(87) Internationale Veröffentlichungsnummer: WO 2008/000832

(56) Entgegenhaltungen:
- EP-A2- 0 716 108
- EP-B1- 0 705 290
- WO-A-03/060033

## Beschreibung

Die Erfindung betrifft das Gebiet der feuchtigkeitsreaktiven Schmelzklebstoffe, insbesondere für das Verkleben von Scheiben von Transportmitteln und im Fester- oder Türenbau.

### Stand der Technik

Reaktive Polyurethan-Schmelzklebstoffe sind seit langem bekannt. Schmelzklebstoffe (Hot Melts) haben den grossen Vorteil, dass sie beim Abkühlen erstarren und dadurch schnell Festigkeit aufbauen. Reaktive Polyurethanklebstoffe weisen Isocyanatgruppen auf, welche mit Wasser, insbesondere in der Form von Luftfeuchtigkeit, vernetzen, wodurch die Klebstoffe eine weitere Festigkeitserhöhung erfahren und ein Wiederaufschmelzen bei erhöhter Temperatur verhindert wird.

Schmelzklebstoffe weisen jedoch den grossen Nachteil auf, dass der Klebstoff beim Kontaktieren des kalten Substrats mit der heissen Klebstoff-Schmelze schlagartig abgekühlt wird. Diese schlagartige Abkühlung führt dazu, dass einerseits grosse Spannungen im Klebstoff, insbesondere an der für die Haftung wesentlichen Grenzfläche Klebstoff/Substrat, auftreten und dass das mit dem Klebstoff in Kontakt stehende Substrat kurze Zeit nach dem Fügen, typischerweise nach einigen Sekunden bis Minuten, nicht mehr verschiebbar ist. Eine derartige Verschiebbarkeit ist jedoch in industriellen Prozessen, wie beispielsweise beim Scheibenkleben, vielfach für eine Endpositionierung bzw. Feinjustierung unbedingt nötig.

Aus diesem Grund werden Schmelzklebstoffe, insbesondere solche mit einer Applikationstemperatur von über 80 °C, für derartige Anwendungen selten eingesetzt.

Es wurden diverse Anstrengungen unternommen, diese Nachteile von Schmelzklebstoff zu vermindern. So beschreibt EP-B-0 705 290 einen Schmelzklebstoff mit einer Hautbildungszeit von 30 Minuten, welcher ein bei Raumtemperatur flüssiges reaktives Prepolymer und ein bei Raumtemperatur festes Polymer oder Prepolymer aufweist, sich bei einer Temperatur von 40 bis 50 °C verflüssigen lässt und nach dem Applizieren während einigen Minuten ein Verschieben des Substrats erlaubt (Offenzeit).

Es hat sich jedoch gezeigt, dass diese Offenzeit für viele Anwendungen jedoch zu kurz ist. So gibt es einerseits Anwendungen, bei denen die Zeit für eine Endpositionierung länger ist oder bei denen eine längere Offenzeit gefordert ist. So muss beispielsweise beim Verkleben von grossflächigen Substraten, wie Anbaumodulen oder Scheiben von Transportmitteln, insbesondere von Bussen oder Schienenfahrzeugen, eine bestimmte Offenzeit von mindestens 40 Minuten aufweisen. Denn während dieser Zeit muss der Klebstoff aufgetragen, gefügt und endpositioniert werden, ohne dass der Klebstoff bereits eine Haut gebildet hat oder sich an irgendeiner Stelle bereits derartig verfestigt hat, dass dort die Haftung zum Substrat nicht mehr gewährleistet ist.

Übliche bei Raumtemperatur applizierte einkomponentige Polyurethanklebstoffe weisen zwar eine längere Offenzeit auf. Ihr Festigkeitsaufbau, welcher lediglich durch die Vernetzung von Isocyanat-Prepolymeren mit Wasser, insbesondere Luftfeuchtigkeit, erfolgt, ist jedoch zu langsam, um ohne Fixierungshilfen ein Abrutschen des Substrats zu verhindern oder ein frühzeitiges örtliches Verlagern des Klebverbundes zu erlauben.

### Darstellung der Erfindung

Aufgabe der vorliegenden Erfindung ist es daher, eine Schmelzklebstoffzusammensetzung zur Verfügung zu stellen, welche die Nachteile des Standes der Technik überwindet und einerseits eine erhöhte Offenzeit aufweist, andererseits trotzdem über eine genügend hohe Frühfestigkeit verfügt.

Ein derartiger Schmelzklebstoff erlaubt einerseits ein verlängertes Positionieren des Substrats und andererseits eine sichere Verklebung von grossflächigen Substraten.

Es wurde überraschenderweise gefunden, dass dies durch eine feuchtigkeitsreaktive Schmelzklebstoffzusammensetzung gemäss Anspruch 1 ermöglicht wird.

### Wege zur Ausführung der Erfindung

Die vorliegende Erfindung betrifft einerseits eine feuchtigkeitsreaktive Schmelzklebstoffzusammensetzung, welche mindestens ein bei Raumtemperatur flüssiges, Isocyanatgruppen aufweisendes Polyurethanprepolymer **P1** sowie mindestens ein bei Raumtemperatur festes, lineares Polyurethan **P2** mit einer Schmelzviskosität von 100 - 300 Pa·s bei 170 °C und welches Polycaprolacton-Segmente enthält und Hydroxylgruppen aufweist, umfasst.

Ein erfindungswesentliches Merkmal ist die Anwesenheit von mindestens einem bei Raumtemperatur festen, linearen, Polycaprolacton-Segmente enthaltenden Polyurethan **P2**, welches Hydroxylgruppen aufweist. Das feste Polyurethan **P2** weist eine Schmelzviskosität, gemessen nach DIN 53.735, von 100 - 300 Pa·s, bevorzugt von 100 -150 Pa·s, bei 170 °C auf.

Es hat sich gezeigt, dass es wesentlich ist, dass das feste Polyurethan **P2** Hydroxylgruppen aufweist. Werden stattdessen andere feste Polyurethane mit endständigen Isocyanatgruppen oder solche ohne Hydroxylgruppen verwendet, wird das erfindungswesentliche Verhalten nicht erhalten und/oder es treten Nachteile auf. Das feste Polyurethan **P2** weist bevorzugt eine Hydroxylzahl von weniger als 5 mg KOH/g auf.

Das Polyurethan **P2** ist bei Raumtemperatur fest und weist insbeondere einen Schmelzpunkt von mindestens 50 °C, typischerweise zwischen 60 und 80 °C, bevorzugt zwischen 60 und 70 °C, auf. Als Schmelzpunkt wird insbesondere das Maximum der mittels dynamischer Differenzkalorimetrie (DSC, differential scanning calorymetry) ermittelten Kurve beim Aufheizvorgang, in dem das Material vom festen in den flüssigen Zustand übergeht, bezeichnet.

Das feste Polyurethan **P2** ist linear und enthält als Strukturelement Polycaprolacton-Segmente. Es wird insbesondere durch eine Additionsreaktion aus mindestens einem Polycaprolactondiol und mindestens einem Diisocyanat mit einem Molekulargewicht von unter 1000 g/mol hergestellt, wobei zusätzlich kurzkettige Diole als Kettenverlängerer eingesetzt werden können. Die Additionsreaktion wird so geführt dass die Summe der Hydroxylgruppen des Polycaprolactondiols und des optional verwendeten Kettenverlängerers im Verhältnis zu den Isocyanatgruppen des Polyisocyanats im stöchiometrischen Überschuss vorhanden sind.

In einer besonders bevorzugten Ausführungsform ist das Polyurethan **P2** ein durch ein Alkylendiol, insbesondere Butandiol, kettenverlängertes Polyurethan aus Polycaprolactondiol und einem Diisocyanat mit einem Molekulargewicht von unter 1000 g/mol.

Als Diisocyanat mit einem Molekulargewicht von unter 1000 g/mol sind insbesondere 4,4'-, 2,4'- und 2,2'-Diphenylmethandiisocyanat und beliebige Gemische dieser Isomeren (MDI), 2,4- und 2,6-Toluylendiisocyanat und beliebige Gemische dieser Isomeren (TDI), 1,6-Hexamethylendiisocyanat (HDI), 1-Isocyanato-3,3,5-trimethyl-5-isocyanatomethyl-cyclohexan (=Isophorondiisocyanat oder IPDI) und Perhydro-2,4'- und -4,4'-diphenylmethandiisocyanat (HMDI) geeignet. Als bevorzugt gilt MDI.

Das feste Polyurethan **P2** weist vorzugsweise einen Melt Flow Index (MFI), gemessen nach DIN 53.735, von 30 - 100 g/10 Minuten, insbesondere von 70 - 90 g/10 Minuten, auf.

Das Polyurethan **P2** zeichnet sich durch eine sehr schnelle Kristallisationsgeschwindigkeit und einen hohen Grad an Thermoplastizität aus.

Bevorzugte feste Polyurethane **P2** sind gewisse unter der Marke Pearlbond® von Merquinsa, Spanien erhältlich. Besonders bevorzugt sind Pearlbond® DIPP-523, Pearlbond® 503, Pearlbond® DIPP-521 und Pearlbond® 501. Meist bevorzugt sind Pearlbond® DIPP-523 und Pearlbond® 503,

Bevorzugt beträgt der Anteil des bei Raumtemperatur festen lineare Polyurethan **P2** 1.5 - 10 Gew.-%, bevorzugt 2.0 bis 6.5 Gew.-%, bezogen auf die gesamte Schmelzklebstoffzusammensetzung.

Die feuchtigkeitsreaktive Schmelzklebstoffzusammensetzung enthält weiterhin ein bei Raumtemperatur flüssiges, Isocyanatgruppen aufweisendes Polyurethanprepolymer **P1**. Geeignete Polyurethanprepolymere **P1** sind insbesondere erhältlich durch die Umsetzung von mindestens einem Polyisocyanat mit mindestens einem Polyol, wobei das NCO/OH-Verhältnis höchstens 2.5, insbesondere höchstens 2.2, beträgt.

Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von ≤ 2.5, bevorzugt ≤ 2.2, eingehalten wird. Unter dem NCO/OH-Verhältnis wird hierbei das Verhältnis der Anzahl der eingesetzten Isocyanatgruppen zu der Anzahl der eingesetzten Hydroxylgruppen verstanden. Bevorzugt verbleibt nach der Umsetzung aller Hydroxylgruppen des Polyols ein Gehalt an freien Isocyanatgruppen von 0.5 bis 3 Gewichts-%, bezogen auf das gesamte Polyurethanprepolymer **P1**.

Gegebenenfalls kann das Polyurethanprepolymer **P1** unter Mitverwendung von Weichmachern hergestellt werden, wobei die verwendeten Weichmacher keine gegenüber Isocyanaten reaktive Gruppen enthalten.

Als Polyole für die Herstellung eines Polyurethanprepolymers **P1** können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxypropylendiole oder Polyoxypropylentriole. Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.
   Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden.
- Polyhydroxyfunktionelle Acrylonitril/Polybutadien-Copolymere, wie sie beispielsweise aus Epoxiden oder Aminoalkoholen und carboxylterminierten Acrylonitril/Polybutadien-Copolymeren (kommerziell erhältlich unter dem Namen Hycar^{®} CTBN von Hanse Chemie) hergestellt werden können.
   Diese genannten Polyole weisen bevorzugt ein mittleres Molekulargewicht von 250 - 30'000 g/mol, insbesondere von 1'000 - 30'000 g/mol, und weisen bevorzugt eine mittlere OH-Funktionalität im Bereich von 1.6 bis 3 auf.
   Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanprepolymers **P1** mitverwendet werden.

Es hat sich gezeigt, dass das flüssige Polyurethanprepolymer **P1** mindestens aus einem Polyoxyalkylenpolyol, insbesondere einem Polyalkylendiol oder Polyalkylendiol, bevorzugt mit einem Ungesättigtheitsgrad von tiefer als 0.02 mEq/g und einem Molekulargewicht von 1000 - 30'000 g/mol, insbesondere von 1000 - 8000 g/mol, und mindestens einem Polyisocyanat hergestellt wird.

Als Polyisocyanate für die Herstellung des Polyurethanprepolymers **P1** können beispielsweise die folgenden handelsüblichen Polyisocyanate verwendet werden:

1,6-Hexamethylendüsocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Di-isocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate. Bevorzugt sind MDI, TDI, HDI und IPDI.

Das flüssige Polyurethanprepolymer **P1** wird typischerweise in einem Anteil von 20 - 40 Gewichts-%, bezogen auf die gesamte Schmelzklebstoffzusammensetzung, eingesetzt.

Besonders bevorzugt sind Schmelzklebstoffzusammensetzungen, in denen das Gewichtsverhältnis von Polyurethanprepolymer **P1** zu Polyurethan **P2** 15 - 4, insbesondere 10 - 6, beträgt.

Für die Optimierung der mechanischen Eigenschaften und Applikationseigenschaften ist es von Vorteil, wenn die Schmelzklebstoffzusammensetzung weiterhin mindestens einen Füllstoff enthält. Vorzugsweise wird der Füllstoff in einer Menge von 20 - 50 Gew.-%, bezogen auf die gesamte Schmelzklebstoffzusammensetzung, eingesetzt. Als Füllstoffe sind geeignet anorganische und organische Füllstoffe, zum Beispiel natürliche, gemahlene oder gefällte Calciumcarbonate, welche gegebenenfalls mit Fettsäuren, insbesondere Stearaten, beschichtet sind, Baryt (BaSO₄, auch Schwerspat genannt), calcinierte Kaoline, Kieselsäuren, insbesondere hochdisperse Kieselsäuren aus Pyrolyseprozessen, Russe, insbesondere industriell hergestellte Russe (im Folgenden als "Russ" bezeichnet), PVC-Pulver oder Hohlkugeln sowie flammhemmende Füllstoffe wie Hydrate oder Hydroxide, insbesondere Aluminiumhydroxid und Aluminiumoxid-Trihydrat. Bevorzugte Füllstoffe sind Calciumcarbonate, Russe und kalzinierte Kaoline.

Weiterhin ist es vorteilhaft, wenn die Schmelzklebstoffzusammensetzung mindestens einen Katalysator, insbesondere einen zinnorganischen Katalysator, wie beispielsweise Dibutylzinndilaurat, enthält.

Es hat sich gezeigt, dass es besonders vorteilhaft ist, eine Katalysatormischung, insbesondere eine Mischung aus einem zinnorganischen Katalysator und einem tertiäre Aminogruppen enthaltenden Katalysator, wie beispielsweise 2,2'-Dimorpholinodiethylethyer (DMDEE) oder 1,4-Diazabicyclo[2.2.2]octan (DABCO), zu verwenden.

Die Menge des Katalysators, insbesondere des zinnorganischen Katalysators, beträgt vorteilhaft zwischen 0.1 und 2 Gew.-%, bezogen auf die gesamte Schmelzklebstoffzusammensetzung.

Die Zusammensetzung enthält gegebenenfalls weitere Bestandteile, wie sie nach dem Stand der Technik üblicherweise eingesetzt werden. Insbesondere enthält die Zusammensetzung gegebenenfalls eines oder mehrere der folgenden Hilfs- und Zusatzmittel:
- Weichmacher, beispielsweise Ester organischer Carbonsäuren oder deren Anhydride, Phthalate, wie beispielsweise Dioctylphthalat oder Diisodecylphthalat, Adipate, wie zum Beispiel Dioctyladipat, Sebacate, Polyole wie beispielsweise Polyoxyalkylenpolyole oder Polyesterpolyole, organische Phosphor- und Sulfonsäureester oder Polybutene;
- Lösemittel, beispielsweise Ketone wie Aceton, Methylethylketon, Diisobutylketon,Acetonylaceton,Mesityloxid,sowie cyclische Ketone wie Methylcyclohexanon und Cyclohexanon; Ester wie Ethylacetat, Propylacetat oder Butylacetat, Formiate, Propionate oder Malonate; Ether wie Ketonether, Esterether und Dialkylether wie Diisopropylether, Diethylether, Dibutylether, Diethylenglykoldiethylether sowie Ethylenglykoldiethylether; aliphatische und aromatische Kohlenwasserstoffe wie Toluol, Xylol, Heptan, Octan sowie unterschiedliche Erdölfraktionen wie Naphtha, White Spirit, Petrolether oder Benzin;halogenierte Kohlenwasserstoffe wie Methylenchlorid; sowie N-alkylierte Lactame wie beispielsweise N-Methylpyrrolidon,N-Cyclohexylpyrrolidon oder N-Dodecylpyrrolidon;
- weitere in der Polyurethanchemie übliche Katalysatoren;
- Reaktivverdünner und Vernetzer, beispielsweise Polyisocyanate wie MDI, PMDI, TDI, HDI, 1,12-Dodecamethylendüsocyanat, Cyclohexan-1,3- oder 1,4-diisocyanat, IPDI, Perhydro-2,4'- und -4,4'-diphenylmethandüsocyanat, 1,3-und 1,4-Tetramethylxylylendüsocyanat, Oligomere und Polymere dieser Polyisocyanate, insbesondere Isocyanurate, Carbodiimide, Uretonimine, Biurete, Allophanate und Iminooxadiazindione der genannten Polyisocyanate, Addukte von Polyisocyanaten mit kurzkettigen Polyolen, sowie Adipinsäuredihydrazid und andere Dihydrazide;
- latente Polyamine wie beispielsweise Polyaldimine, Polyketimine, Polyenamine, Polyoxazolidine, an einen Zeolith adsorbierte oder mikroverkapselte Polyamine sowie Amin-Metallkomplexe, bevorzugt Polyaldimine Polyaldimine aus der Umsetzung eines primären aliphatischen Polyamins mit einem Aldehyd, insbesondere einem Aldehyd wie beispielsweise 2,2-Dimethyl-3-acyloxy-propanal, insbesondere 2,2-Dimethyl-3-lauroyloxy-propanal, sowie Komplexe zwischen Methylendianilin (MDA) und Natriumchlorid (erhältlich als Dispersion in Diethylhexylphthalat oder Diisodecylphthalat unter dem Handelsnamen Caytur^{®} 21 von Crompton Chemical);
- Trocknungsmittel, wie beispielsweise p-Tosylisocyanat und andere reaktive Isocyanate, Orthoameisensäureester, Calciumoxid; Vinyltrimethoxysilan oder andere schnell hydrolysierende Silane wie beispielsweise Organoalkoxysilane, welche in α-Stellung zur Silangruppe eine funktionelle Gruppe aufweisen, oder Molekularsiebe;
- Rheologie-Modifizierer wie beispielsweise Verdickungsmittel, zum Beispiel Harnstoffverbindungen, Polyamidwachse, Bentonite oder pyrogene Kieselsäuren;
- Haftvermittler, insbesondere Organoalkoxysilane ("Silane") wie beispielsweise Epoxysilane, Vinylsilane, (Meth)acrylsilane, Isocyanatosilane, Carbamatosilane, S-(Alkylcarbonyl)-mercaptosilane und Aldiminosilane, sowie oligomere Formen dieser Silane;
- Stabilisatoren gegen Wärme, Licht- und UV-Strahlung; flammhemmende Substanzen;
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen;
sowie weitere, üblicherweise in Isocyanat-haltigen Zusammensetzungen eingesetzte Substanzen.

Die beschriebene feuchtigkeitshärtende Schmelzklebstoffzusammensetzung wird unter Ausschluss von Feuchtigkeit aufbewahrt. Sie ist lagerstabil, d.h. sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität, der Auspressmenge oder der Auspresskraft ermittelt.

Die Schmelzklebstoffzusammensetzung reagiert unter Vernetzung mit Wasser (chemische Aushärtung). Hierbei reagieren die Isocyanatgruppen mit Wasser, insbesondere in der Form von Luftfeuchtigkeit, zu Harnstoffgruppen. Nach erfolgter Reaktion der meisten oder aller Isocyanatgruppen erreicht die Schmelzklebstoffzusammensetzung dadurch ihre Endfestigkeit.

Ein weiterer Aspekt der Erfindung stellt ein Verfahren des Verklebens von einem ersten Substrat **S1** mit einem zweiten Substrat **S2** dar. Dieses Verfahren umfasst zumindest die Schritte:
(i) Erhitzen auf eine Temperatur von 40 - 120 °C, insbesondere von 60 - 90 °C, einer vorgängig beschriebenen feuchtigkeitsreaktiven Schmelzklebstoffzusammensetzung;
(ii) Applizieren der erhitzten feuchtigkeitsreaktiven Schmelzklebstoffzusammensetzung auf die Oberfläche eines ersten Substrates **S1**;
(iii) Fügen unter Kontaktieren der Oberfläche des zweiten Substrates **S2** mit der auf dem ersten Substrat **S1** applizierten Schmelzklebstoffzusammensetzung innerhalb der Offenzeit;
(iv) Aushärten der Schmelzklebstoffzusammensetzung mittels Wasser.

Das erste Substrat **S1** und das zweite Substrat **S2** können hierbei aus demselben oder unterschiedlichem Material sein.

Eine Variante dieses Verfahrens ist ein Verfahren, welches zumindest die Schritte umfasst:
(i) Erhitzen auf eine Temperatur von 40 - 120 °C, insbesondere von 60 - 90 °C, einer vorgängig beschriebenen feuchtigkeitsreaktiven Schmelzklebstoffzusammensetzung;
(ii') Applizieren der erhitzten feuchtigkeitsreaktiven Schmelzklebstoffzusammensetzung in einem Spalt, welcher durch die Oberfläche eines ersten Substrates **S1** und die Oberfläche eines zweiten Substrates **S2** zumindest zum Teil gebildet wird und dadurch erfolgendes Kontaktieren der Oberflächen des ersten Substrates **S1** und des zweiten Substrates **S2** mittels Klebstoff
(iv)Aushärten der Schmelzklebstoffzusammensetzung mittels Wasser.

Das erste Substrat **S1** und das zweite Substrat **S2** können hierbei aus demselben oder unterschiedlichem Material sein.

Als Substrate **S1** und/oder **S2** sind insbesondere Glas, Glaskeramik, PVC, Metall, Holz, lackiertes Metall oder lackiertes Holz bevorzugt.

Besonders bevorzugt ist eines der zwei Substrate **S1** und **S2** Glas oder Glaskeramik und das andere PVC oder lackiertes Metall oder lackiertes Holz.

Die Offenzeit, das heisst die jenige Zeit, die zwischen dem Applizieren der Schmelzklebstoffzusammensetzung und dem Zeitpunkt verstreicht, an dem die Haftung der Schmelzklebstoffzusammensetzung auf dem zu fügenden Substrat nicht mehr vorhanden ist, beträgt mindestens 40 Minuten. Die Hautbildungszeit ist gleich lang oder länger als die Offenzeit. Das heisst, die Schmelzklebstoffzusammensetzung weist eine Offenzeit von mindestens 40 Minuten auf. Die Offenzeit beträgt vorzugsweise zwischen 40 und 240 Minuten, insbesondere zwischen 40 und 180 Minuten. Meist bevorzugt beträgt die Offenzeit zwischen 40 und 80 Minuten.

Wird während der Offenzeit verklebt, baut sich in der Zwischenzeit bereits eine Frühfestigkeit auf, welche es der Schmelzklebstoffzusammensetzung erlaubt, Kräfte zwischen den Substraten **S1** und **S2** zu übertragen.

Es ist wichtig zu realisieren, dass die Schmelzklebstoffzusammensetzung unmittelbar nach dem Applizieren bereits in Kontakt mit Luftfeuchtigkeit stehen kann und somit die chemische Aushärtung einsetzen kann. Diese ist vor dem Schritt (iii) des Fügens, beziehungsweise des Kontaktierens in Schritt (ii'), aber noch nicht derart weit fortgeschritten, dass sich eine Haut an der Oberfläche bildet. Üblicherweise findet die chemische Aushärtung zum Grossteil erst nach dem Schritt (iii) des Fügens, beziehungsweise nach dem Kontaktieren in Schritt (ii'), statt.

Während der Offenzeit können die Fügeteile bewegt, eingeschlagen oder justiert werden, ohne dass dadurch ein negativer Einfluss auf Haftung nach Aushärtung der Schmelzklebstoffzusammensetzung verursacht wird.

Als Ergebnis eines derartigen Verklebungsverfahrens entsteht ein verklebter Artikel.

Derartige Artikel können je nach Verwendungsgebiet eine breite Palette von Artikeln darstellen. Bevorzugt stellt dieser Artikel eine Scheibe, ein Fenster oder eine Türe dar. Diese kann wiederum eine Bestandteil eines Bauwerks oder eines Transportmittels darstellen.

Bevorzugt wird die Schmelzklebstoffzusammensetzung für das Verkleben von grossflächigen Teilen.

Bevorzugte Anwendungen sind einerseits der Einbau von Scheiben in Transportmittel, insbesondere in Busse und Schienenfahrzeuge.

Andererseits bevorzugt sind die Herstellung von Türen und Fenstern, bei denen Glasscheiben, bevorzugt Isolationsglasscheiben, mit dem Rahmen, welcher Holz, Kunststoff, bevorzugt PVC, oder Metall, bevorzugt beschichtetes Metall, mittels der Schmelzklebstoffzusammensetzung verklebt werden.

Die Schmelzklebstoffzusammensetzung kann aber abgesehen von den erwähnten Anwendungen auch für weitere Anwendungen benutzt werden.

### Beispiele

**Tabelle 1. Verwendete Rohstoffe**

| | |
|---|---|
| Acclaim^{®} 4200N | Bayer |
| | low monol Polyoxypropylendiol, mittleres Molekulargewicht ca. 4'000 g/mol, OH-Zahl 28 mg KOH/g, Wassergehalt 0.01 Gew.-% |
| Voranol^{®} CP 4755 | Dow Chemical |
| | Ethylenoxid-terminiertes Polyoxypropylentriol, mittleres Molekulargewicht ca. 4'700 g/mol, OH-Zahl 35 mg KOH/g, Wassergehalt 0.02 Gew.-% |
| Pearlbond ® DIPP-523 (,523') | Merquinsa, Spanien |
| | lineares thermoplastisches Polyurethan enthaltend Polycaprolacton-Segmente Schmelzviskosität (170 °C) (DIN 53.735) = 130 Pa·s Melt Flow Index (DIN 53.735) = 70 - 90 g /10 min OH-Zahl < 5 mg KOH/g |
| Pearlbond ® 503 (,503') | Merquinsa, Spanien |
| | lineares thermoplastisches Polyurethan enthaltend Polycaprolacton-Segmente Schmelzviskosität (170 °C) (DIN 53.735) = 130 Pa.s Melt Flow Index (DIN 53.735) = 70 - 90 g /10 min OH-Zahl < 5 mg KOH/g |
| Pearlbond ® DIPP-539 | Merquinsa, Spanien |
| (,539') | lineares thermoplastisches Polyurethan enthaltend Polycaprolacton-Segmente Schmelzviskosität (170 °C) (DIN 53.735) = 62 Pa.s Melt flow-Index (DIN 53.735) = 150 - 200 g /10 min OH-Zahl < 5 mg KOH/g |
| Acronal LR 8820 | BASF |
| (,Acronal') | hochviskoses Poly-n-butylacrylat |
| Irostic M8304 (,Irostic') | Huntsman GmbH, Deutschland |
| | Lineares Polyurethan, Schmelzviskosität bei 190°C = 17 Pa Pa·s; Melt Volume Rate 60 - 90 bei 170°C/10kg |

### Herstellung eines bei Raumtemperatur flüssigen, Isocyanatgruppen aufweisenden Polyurethanprepolymers P1: P1-1

Unter Feuchtigkeitsausschluss wurden in einem Rührgefäss 1560 g Acclaim^{®} 4200N, 3120 g Voranol^{®} CP 4755, 600 g Diisodecylphthalat (DIDP), 720 g 4,4'-Diphenylmethan-diisocyanat (mit einem NCO-Equivalentgewicht.von 125 g/Eq) bei 90 °C während 4 Stunden gerührt, bis der Isocyanatgehalt der Mischung einen konstanten Wert von 2.15 Gew.-% aufwies. Das erhaltene Produkt wurde auf Raumtemperatur abgekühlt und unter Ausschluss von Feuchtigkeit aufbewahrt. Es hatte eine Viskosität von 64 Pa·s bei 20 °C.

### Herstellung der Schmelzklebstoffzusammensetzungen: Ref.1-Ref.3 und 1-4

Die Schmelzklebstoffzusammensetzungen wurden in einem Planetenmischer, welcher mit Heizmantel und Vakuumpumpe ausgestattet war, hergestellt.

Es wurde der Weichmacher (DIDP) vorgelegt, anschliessend das wie oben beschrieben hergestellte Polyurethanprepolymer *P1-1*, das Thixotropiermittel (pyrogene Kieselsäure) sowie das feste Polymer (das Polyurethan **P2**, ,539', ,Acronal' bzw. ,Irostic') zugegeben und 5 Minuten unter Stickstoff gemischt. Anschliessend wurde der Füllstoff (kalziniertes Kaolin) zugegeben und unter Stickstoff während 10 Minuten eingemischt. Anschliessend wurde auf 100 mbar evakuiert und bei hoher Drehzahl gemischt, bis die Temperatur der Mischung auf 70 °C angestiegen war. Die Schmelzklebstoffzusammensetzung wurde auf Feinheit kontrolliert und falls notwendig nochmals nachgemischt. Dann wurde die Katalysatorlösung (25 Gew.-% Dibutylzinndilaurat in DIDP) hinzugegeben und nochmals 5 Minuten bei hoher Drehzahl gemischt, das Vakuum mit Stickstoff gebrochen und die Schmelzklebstoffzusammensetzung in Aluminium-Kartuschen abgefüllt.

### Messmethoden

Die Offenzeit wurde wie folgt gemessen. Die verschlossene Kartusche enthaltend die jeweilige Schmelzklebstoffzusammensetzung wurde während 2 Stunden bei 80°C aufgewärmt. Der Klebstoff wurde nun als Raupe über eine auf das Kartuschenende aufgebrachte Runddüse mit Öffnungsdurchmesser von 8.5 mm auf eine 23°C kalte Glasplatte appliziert. Durch periodische Berührung der Klebstoffraupe mit der Spitze einer Polyethylen-Pipette wurde derjenige Zeitpunkt ermittelt, bei welchem keine Benetzung der Pipette durch den aushärtenden Klebstoff beobachtet werden konnte. Dieser Zeitpunkt wurde als "Offenzeit" angegeben.

Die **Viskosität** wurde auf einem thermostatisierten Viskosimeter Physica MCR 300 (Platten/Platten, Plattendurchmesser 20 mm, Platten-Abstand 1 mm, Schergeschwindigkeit 50 s⁻¹) bei der jeweiligen Temperatur (50°C, 75°C, 100°C) gemessen und als "visc_{50°C}", "visc_{75°C}" "visc_{100°C}" angegeben.

**Die Shore A-Härte** wurde bestimmt nach DIN 53505. Die Proben wurden nach 1, 7 und 14 Tagen Aushärtung bei 23°C und 50 % rel. Luftfeuchtigkeit gemessen.

### Die Durchhärtungsgeschwindigkeit wurde wie folgt bestimmt:

Der während 2 Stunden in einem Ofen bei 80°C gelagerte Klebstoff wurde in die Aussparung einer Teflonform mit keilförmiger Aussparung appliziert und mittels Holzspatel abgestrichen. Nach 24 Stunden bei 23°C und 50 % rel. Luftfeuchtigkeit wurde vom dünnen Ende des Keiles her der nun vernetzte Klebstoff von der Teflonform sorgfältig abgehoben, bis zu der Stelle (d.h. Dicke), an welcher auf der geneigten Keilaussparungsfläche unausgehärteter Klebstoff gefunden wird. Aufgrund der Abmessungen kann so die Aushärtungsschichtdicke als Mass für die Durchhärtungsgeschwindigkeit ermittelt werden. Diese wird in Tabelle 2 als "DHG₂₄ₕ" angegeben.

Die **Zugfestigkeit** und die **Bruchdehnung** wurden bestimmt nach DIN 53504 (Zuggeschwindigkeit: 200 mm/min) an während 14 Tagen im Normklima (23±1 °C, 50±5% relative Luftfeuchtigkeit) ausgehärteten Filmen mit einer Schichtdicke von 1.1 mm.

### Die Haftungen wurden wie folgt bestimmt:

Zur Prüfung der Haftung wurden die Substrate mit Sika^{®} Cleaner-205 gereinigt. Nach einer Ablüftzeit von 10 Minuten wurde die jeweilige Zusammensetzung in Form einer Raupe aus einer Kartusche, welche 2 Stunden bei 80°C in einem Ofen aufgeheizt wurde, auf das jeweilige Substrat aufgetragen. Das mit der Raupe beschichtete Substrat wurde dann während 7 Tagen im Normklima (23±1 °C, 50±5% relative Luftfeuchtigkeit) gelagert, worauf die Haftung geprüft wurde. Zur Prüfung der Haftung wurde die ausgehärtete Raupe jeweils an einem Ende knapp über der Oberfläche des Substrates (Klebefläche) eingeschnitten. Das eingeschnittene Ende der Raupe wurde von Hand festgehalten und dann vorsichtig und langsam, schälend in Richtung des anderen Raupenendes, vom Substrat gezogen. Wenn dabei die Haftung so stark war, dass das Raupenende beim Ziehen abzureissen drohte, wurde mittels eines Cutters ein Schnitt senkrecht zur Raupenziehrichtung bis auf die blanke Oberfläche des Substrates angebracht und die Raupe so ein Stück weit abgelöst. Solche Schnitte wurden, wenn nötig, beim Weiterziehen im Abstand von 2 bis 3 mm wiederholt. Auf diese Weise wurde die gesamte Raupe vom Substrat gezogen bzw. geschnitten. Die Bewertung der Hafteigenschaften erfolgte anhand dem nach dem Abziehen der Raupe auf der Substratoberfläche zurückbleibenden ausgehärteten Dicht- oder Klebstoff (Kohäsionsbruch), und zwar durch Abschätzen des kohäsiven Anteils der Haftfläche, gemäss folgender Skala:
1 = mehr als 95% Kohäsionsbruch
2 = 75 - 95% Kohäsionsbruch
3 = 25 - 75% Kohäsionsbruch
4 = weniger als 25% Kohäsionsbruch

Testresultate mit Kohäsionsbruchwerten von weniger als 75%, also Werte von 3 und 4, gelten als ungenügend.

**Tabelle 2 Zusammensetzungen und deren Eigenschaften.**

| | *Ref.1* | *Ref.2* | *Ref.3* | *1* | *2* | *3* | *4* |
|---|---|---|---|---|---|---|---|
| *P1-1* (**P1**) | 36 | 36 | 36 | 36 | 36 | 36 | 36 |
| DIDP | 8 | 8 | 8 | 8 | 8 | 8 | 8 |
| pyrogene Kieselsäure | 5 | 5 | 5 | 5 | 5 | 5 | 5 |
| kalziniertes Kaolin | 46 | 43 | 43 | 43 | 45 | 44 | 46 |
| DBTDL (25% in DIDP) | 2 | 2 | 2 | 2 | 1 | 1 | 1 |
| *523* (**P2**) | | | | 6 | | 6 | 4 |
| *503* (**P2**) | | | | | 5 | | |
| *539* | | | 6 | | | | |
| *Acronal* | 3 | | | | | | |
| *Irostic* | | 6 | | | | | |
| *Total* | *100* | *100* | *100* | *100* | *100* | *100* | *100* |
| Offenzeit [min] | 20 | 6 | 30 | 45 | 120 | 160 | 70 |
| visc_{50°C}[Pa s] | 99 | 169 | 299 | 118 | 64 | 98 | 106 |
| visc_{75°C}[Pa s] | 53 | 36 | 81 | 28 | 23 | 24 | 31 |
| visc_{100°C}[Pa s] | 30 | 20 | 37 | 16 | 15 | 16 | 20 |
| DHG₂₄ₕ [mm] | 4.5 | 3.7 | 3 | 3.9 | 3.5 | 3.3 | 3.0 |
| Shore A_{1d} | 27 | 58 | 42 | 44 | 35 | 40 | 39 |
| Shore A_{7d} | 52 | 64 | 58 | 56 | 48 | 48 | 50 |
| Shore A_{14d} | 53 | 70 | 61 | 57 | 52 | 55 | 57 |
| ZF [MPa] | 3.96 | 3.9 | 3.5 | 3.4 | 3.98 | 3.2 | 3.3 |
| BD [%] | 556 | 455 | 335 | 330 | 400 | 390 | 330 |
| E-Modul[MPa] | 3.17 | 8.6 | 5 | 6.4 | 3.64 | 4.7 | 5.5 |
| Haftung | | | | | | | |
| auf Glas | 1 | 1 | 1 | 1 | 1 | 1 | 1 |
| auf 2C-PUR | 1 | 1 | 1 | 1 | 1 | 1 | 1 |

## Patentansprüche

1. Feuchtigkeitsreaktive Schmelzklebstoffzusammensetzung umfassend
a) mindestens ein bei Raumtemperatur flüssiges Isocyanatgruppen aufweisendes Polyurethanprepolymer **P1**
b) mindestens ein bei Raumtemperatur festes, lineares Polyurethan **P2**, welches Polycaprolacton-Segmente enthält, Hydroxylgruppen aufweist und eine Schmelzviskosität von 100 - 300 Pa.s bei 170°C aufweist.

2. Feuchtigkeitsreaktive Schmelzklebstoffzusammensetzung gemäss Anspruch 1, **dadurch gekennzeichnet, dass** das bei Raumtemperatur feste, lineare, Polycaprolacton-Segmente enthaltende Polyurethan **P2** aus mindestens einem Polycaprolactondiol und mindestens einem Diisocyanat mit einem Molekulargewicht von unter 1000 g/mol hergestellt wird.

3. Feuchtigkeitsreaktive Schmelzklebstoffzusammensetzung gemäss Anspruch 2, **dadurch gekennzeichnet, dass** das bei Raumtemperatur feste Polycaprolacton-Segmente enthaltendes Polyurethan **P2** ein durch Alklylendiol, insbesondere durch Butylendiol, kettenverlängertes Polyurethan aus Polycaprolactondiol und einem Diisocyanat mit einem Molekulargewicht von unter 1000 g/mol, insbesondere 4,4'-, 2,4'- und 2,2'-Diphenylmethandiisocyanat und beliebige Gemische dieser Isomeren (MDI), 2,4- und 2,6-Toluylendiisocyanat und beliebige Gemische dieser Isomeren (TDI), 1,6-Hexamethylendiisocyanat (HDI), 1-Isocyanato-3,3,5-trimethyl-5-isocyanatomethyl-cyclohexan (=Isophorondiisocyanat oder IPDI) oder Perhydro-2,4'- und -4,4'-diphenylmethandiisocyanat (HMDI), bevorzugt MDI, ist.

4. Feuchtigkeitsreaktive Schmelzklebstoffzusammensetzung gemäss einem der vorhergehenden Ansprüche, **dadurch gekennzeichnet, dass** das bei Raumtemperatur feste lineare Polycaprolacton-Segmente enthaltende Polyurethan **P2** einen Melt-Flow Index von 30 - 100 g/10 Minuten, insbesondere von 70 - 90 g/10 Minuten, aufweist.

5. Feuchtigkeitsreaktive Schmelzklebstoffzusammensetzung gemäss einem der vorhergehenden Ansprüche, **dadurch gekennzeichnet, dass** das bei Raumtemperatur feste lineare Polycaprolacton-Segmente enthaltende Polyurethan **P2** eine Schmelzviskosität von 100 - 150 Pa.s bei 170°C aufweist.

6. Feuchtigkeitsreaktive Schmelzklebstoffzusammensetzung gemäss einem der vorhergehenden Ansprüche, **dadurch gekennzeichnet, dass** das bei Raumtemperatur feste lineare Polycaprolacton-Segmente enthaltende Polyurethan **P2** eine OH-Zahl von weniger als 5 mg KOH/g aufweist.

7. Feuchtigkeitsreaktive Schmelzklebstoffzusammensetzung gemäss einem der vorhergehenden Ansprüche, **dadurch gekennzeichnet, dass** das bei Raumtemperatur flüssige Isocyanatgruppen aufweisende Polyurethanprepolymer **P1** aus mindestens einem Polyoxyalkylenpolyol, insbesondere Polyalkylendiol oder Polyalkylendiol, bevorzugt mit einem Ungesättigtheitsgrad von tiefer als 0.02 mEq/g und einem Molekulargewicht von 1000 - 30'000 g/mol, insbesondere von 1000 - 8000 g/mol, und mindestens einem Polyisocyanat hergestellt wird.

8. Feuchtigkeitsreaktive Schmelzklebstoffzusammensetzung gemäss einem der vorhergehenden Ansprüche, **dadurch gekennzeichnet, dass** der Anteil des bei Raumtemperatur festen lineare Polycaprolacton-Segmente enthaltenden Polyurethans **P2** 1.5 - 10 Gew.-%, bevorzugt 2 bis 6.5 Gew.-%, bezogen auf das Gewicht der feuchtigkeitsreaktiven Schmelzklebstoffzusammensetzung, beträgt.

9. Feuchtigkeitsreaktive Schmelzklebstoffzusammensetzung gemäss einem der vorhergehenden Ansprüche, **dadurch gekennzeichnet, dass** das Gewichtsverhältnis von bei Raumtemperatur flüssigem Polyurethanprepolymer **P1** zu festem Polyurethan **P2** 15 - 4, insbesondere 10 - 6, beträgt.

10. Feuchtigkeitsreaktive Schmelzklebstoffzusammensetzung gemäss einem der vorhergehenden Ansprüche, **dadurch gekennzeichnet, dass** sie weiterhin mindestens einen Füllstoff, insbesondere in einer Menge von zwischen 20 und 50 Gew.-%, bezogen auf das Gewicht der feuchtigkeitsreaktiven Schmelzklebstoffzusammensetzung, enthält.

11. Feuchtigkeitsreaktive Schmelzklebstoffzusammensetzung gemäss einem der vorhergehenden Ansprüche, **dadurch gekennzeichnet, dass** die Zusammensetzung mindestens einen Zinnorganischen Katalysator, insbesondere in einer Menge von zwischen 0.1 und 2 Gew.-%, bezogen auf das Gewicht der feuchtigkeitsreaktiven Schmelzklebstoffzusammensetzung, enthält.

12. Verfahren des Verklebens von einem ersten Substraten **S1** und einem zweiten Substrat **S2** umfassend die Schritte
(i) Erhitzen auf eine Temperatur von 40 - 120 °C, insbesondere von 60 - 90 °C, einer feuchtigkeitsreaktiven Schmelzklebstoffzusammensetzung gemäss einem der Ansprüche 1 bis 11;
(ii) Applizieren der erhitzen feuchtigkeitsreaktiven Schmelzklebstoffzusammensetzung auf die Oberfläche eines ersten Substrates **S1**;
(iii) Fügen unter Kontaktieren der Oberfläche des zweiten Substrates **S2** mit der auf dem ersten Substrat **S1** applizierten Schmelzklebstoffzusammensetzung innerhalb der Offenzeit;
(iv) Aushärten der Schmelzklebstoffzusammensetzung mittels Wasser;
wobei das erste Substrat **S1** und das zweite Substrat **S2** aus demselben oder unterschiedlichem Material sind.

13. Verfahren des Verklebens von einem ersten Substraten **S1** und einem zweiten Substrat **S2** umfassend die Schritte
(i) Erhitzen auf eine Temperatur von 40 - 120 °C, insbesondere von 60 - 90 °C, einer feuchtigkeitsreaktiven Schmelzklebstoffzusammensetzung gemäss einem der Ansprüche 1 bis 11;
(ii') Applizieren der erhitzten feuchtigkeitsreaktiven Schmelzklebstoffzusammensetzung in einem Spalt, welcher durch die Oberfläche eines ersten Substrates **S1** und die Oberfläche eines zweiten Substrates **S2** zumindest zum Teil gebildet wird und dadurch erfolgendes Kontaktieren der Oberflächen des ersten Substrates **S1** und des zweiten Substrates **S2** mittels Klebstoff
(iv) Aushärten der Schmelzklebstoffzusammensetzung mittels Wasser;
wobei das erste Substrat **S1** und das zweite Substrat **S2** aus demselben oder unterschiedlichem Material sind.

14. Verfahren gemäss Anspruch 12 oder 13, **dadurch gekennzeichnet, dass** die Offenzeit zwischen 40 und 240 Minuten, insbesondere zwischen 40 und 180 Minuten, bevorzugt zwischen 40 und 80 Minuten, beträgt.

15. Verklebter Artikel, welcher nach einem der Ansprüche 12 bis 14 verklebt worden ist.

## Claims

1. Moisture-reactive hotmelt adhesive composition comprising
a) at least one polyurethane prepolymer **P1** containing isocyanate groups being liquid at room temperature
b) at least one linear polyurethane **P2** being solid at room temperature which comprises polycaprolactone segments, contains hydroxyl groups and has a melt viscosity of 100 - 300 Pa.s at 170°C.

2. Moisture-reactive hotmelt adhesive composition according to Claim 1, **characterized in that** the linear polyurethane **P2** being solid at room temperature comprising polycaprolactone segments is prepared from at least one polycaprolactone diol and at least one diisocyanate having a molecular weight of below 1000 g/mol.

3. Moisture-reactive hotmelt adhesive composition according to Claim 2, **characterized in that** the polyurethane **P2** being solid at room temperature comprising polycaprolactone segments is a polyurethane chain-extended by alkylene diol, more particularly by butylene diol, and formed from polycaprolactone diol and a diisocyanate having a molecular weight of below 1000 g/mol, more particularly 4,4'-, 2,4'- and 2,2'-diphenylmethane diisocyanate and any desired mixtures of these isomers (MDI), 2,4- and 2,6-tolylene diisocyanate and any desired mixtures of these isomers (TDI), 1,6-hexamethylene diisocyanate (HDI), 1-isocyanato-3,3,5-trimethyl-5-isocyanatomethylcyclohexane (i.e. isophorone diisocyanate or IPDI) or perhydro-2,4'- and -4,4'-diphenylmethane diisocyanate (HMDI), preferably MDI.

4. Moisture-reactive hotmelt adhesive composition according to any one of the preceding claims, **characterized in that** the linear polyurethane **P2** being solid at room temperature comprising polycaprolactone segments has a melt flow index of 30 - 100 g/10 minutes, more particularly of 70 - 90 g/10 minutes.

5. Moisture-reactive hotmelt adhesive composition according to any one of the preceding claims, **characterized in that** the linear polyurethane **P2** being solid at room temperature comprising polycaprolactone segments has a melt viscosity of 100 - 150 Pa.s at 170°C.

6. Moisture-reactive hotmelt adhesive composition according to any one of the preceding claims, **characterized in that** the linear polyurethane **P2** being solid at room temperature comprising polycaprolactone segments has an OH number of less than 5 mg KOH/g.

7. Moisture-reactive hotmelt adhesive composition according to any one of the preceding claims, **characterized in that** the polyurethane prepolymer **P1** being liquid at room temperature containing isocyanate groups is prepared from at least one polyoxyalkylene polyol, more particularly polyalkylene diol or polyalkylene diol, preferably having a degree of unsaturation of lower than 0.02 meq/g and a molecular weight of 1000 - 30 000 g/mol, more particularly of 1000 - 8000 g/mol, and at least one polyisocyanate.

8. Moisture-reactive hotmelt adhesive composition according to any one of the preceding claims, **characterized in that** the fraction of the polyurethane **P2** being solid at room temperature comprising polycaprolactone segments is 1.5% - 10% by weight, preferably 2% to 6.5% by weight, based on the weight of the moisture-reactive hotmelt adhesive composition.

9. Moisture-reactive hotmelt adhesive composition according to any one of the preceding claims, **characterized in that** the weight ratio of polyurethane prepolymer **P1** being liquid at room temperature to solid polyurethane **P2** is 15 - 4, more particularly 10 - 6.

10. Moisture-reactive hotmelt adhesive composition according to any one of the preceding claims, **characterized in that** it further comprises at least one filler, more particularly in an amount of between 20% and 50% by weight, based on the weight of the moisture-reactive hotmelt adhesive composition.

11. Moisture-reactive hotmelt adhesive composition according to any one of the preceding claims, **characterized in that** the composition comprises at least one organotin catalyst, more particularly in an amount of between 0.1 % and 2% by weight, based on the weight of the moisture-reactive hotmelt adhesive composition.

12. Method of adhesively bonding a first substrate **S1** and a second substrate **S2**, comprising the steps of
(i) heating a moisture-reactive hotmelt adhesive composition according to any one of Claims 1 to 11 to a temperature of 40 - 120°C, more particularly of 60 - 90°C;
(ii) applying the heated moisture-reactive hotmelt adhesive composition to the surface of a first substrate **S1**;
(iii) joining, with contacting, the surface of the second substrate **S2** to the hotmelt adhesive composition applied to the first substrate **S1**, within the open time;
(iv) curing the hotmelt adhesive composition by means of water; the first substrate **S1** and the second substrate **S2** being made from the same or different material.

13. Method of adhesively bonding a first substrate **S1** and a second substrate **S2**, comprising the steps of
(i) heating a moisture-reactive hotmelt adhesive composition according to any one of Claims 1 to 11 to a temperature of 40 - 120°C, more particularly of 60 - 90°C;
(ii') applying the heated moisture-reactive hotmelt adhesive composition in a gap which is formed at least partly by the surface of a first substrate **S1** and the surface of a second substrate **S2**, and thus contacting the surface of the first substrate **S1** and of the second substrate **S2** by means of adhesive
(iv) curing the hotmelt adhesive composition by means of water; the first substrate **S1** and the second substrate **S2** being made from the same or different material.

14. Method according to Claim 12 or 13, **characterized in that** the open time is between 40 and 240 minutes, more particularly between 40 and 180 minutes, preferably between 40 and 80 minutes.

15. Adhesively bonded article adhesively bonded according to any one of Claims 12 to 14.

## Revendications

1. Composition d'adhésif fusible réactive à l'humidité, comprenant
a) au moins un prépolymère polyuréthanne **P1** liquide à la température ambiante, comportant des groupes isocyanate,
b) au moins un polyuréthanne linéaire **P2** solide à la température ambiante, qui contient des segments polycaprolactone, comporte des groupes hydroxy et présente une viscosité à chaud de 100-300 Pa.s à 170 °C.

2. Composition d'adhésif fusible réactive à l'humidité selon la revendication 1, **caractérisée en ce que** le polyuréthanne linéaire **P2** solide à la température ambiante, contenant des segments polycaprolactone, est préparé à partir d'au moins un polycaprolactonediol et d'au moins un diisocyanate ayant une masse moléculaire de moins de 1 000 g/mole.

3. Composition d'adhésif fusible réactive à l'humidité selon la revendication 2, **caractérisée en ce que** le polyuréthanne **P2** solide à la température ambiante, contenant des segments polycaprolactone, est un polyuréthanne à chaîne prolongée par un alkylènediol, en particulier par du butylènediol, à base de polycaprolactonediol et d'un diisocyanate ayant une masse moléculaire de moins de 1 000 g/mole, en particulier de 4,4'-, 2,4'- et 2,2'-diphénylméthane-diisocyanate et de mélanges quelconques de ces isomères (MDI), de 2,4- et 2,6-toluylènediisocyanate et de mélanges quelconques de ces isomères (TDI), de 1,6-hexaméthylène-diisocyanate (HDI), de 1-isocyanato-3,3,5-triméthyl-5-isocyanatométhyl-cyclohexane (= isophorone-diisocyanate ou IPDI) ou de perhydro-2,4'-et -4,4'-diphénylméthane-diisocyanate (HMDI), de préférence de MDI.

4. Composition d'adhésif fusible réactive à l'humidité selon l'une quelconque des revendications précédentes, **caractérisée en ce que** le polyuréthanne linéaire **P2** solide à la température ambiante, contenant des segments polycaprolactone, présente un indice de fluidité à chaud de 30-100 g/10 minutes, en particulier de 70-90 g/10 minutes.

5. Composition d'adhésif fusible réactive à l'humidité selon l'une quelconque des revendications précédentes, **caractérisée en ce que** le polyuréthanne linéaire **P2** solide à la température ambiante, contenant des segments polycaprolactone, présente une viscosité à chaud de 100-150 Pa.s à 170 °C.

6. Composition d'adhésif fusible réactive à l'humidité selon l'une quelconque des revendications précédentes, **caractérisée en ce que** le polyuréthanne linéaire **P2** solide à la température ambiante, contenant des segments polycaprolactone, présente un indice de groupes OH de moins de 5 mg de KOH/g.

7. Composition d'adhésif fusible réactive à l'humidité selon l'une quelconque des revendications précédentes, **caractérisée en ce que** le prépolymère polyuréthanne **P1** liquide à la température ambiante, comportant des groupes isocyanate, est préparé à partir d'au moins un polyoxyalkylènepolyol, en particulier un polyalkylènediol ou polyalkylènediol, ayant de préférence un degré d'insaturation de moins de 0,02 mEq/g et une masse moléculaire de 1 000 - 30 000 g/mole, en particulier de 1 000 - 8 000 g/mole, et d'au moins un polyisocyanate.

8. Composition d'adhésif fusible réactive à l'humidité selon l'une quelconque des revendications précédentes, **caractérisée en ce que** la proportion du polyuréthanne linéaire **P2** solide à la température ambiante, contenant des segments polycaprolactone, est de 1,5 - 10 % en poids, de préférence de 2 à 6,5 % en poids, par rapport au poids de la composition d'adhésif fusible réactive à l'humidité.

9. Composition d'adhésif fusible réactive à l'humidité selon l'une quelconque des revendications précédentes, **caractérisée en ce que** le rapport pondéral du prépolymère polyuréthanne **P1** liquide à la température ambiante au polyuréthanne solide **P2** est de 15 - 4, en particulier de 10 - 6.

10. Composition d'adhésif fusible réactive à l'humidité selon l'une quelconque des revendications précédentes, **caractérisée en ce qu'**en outre elle contient au moins une charge, en particulier en une quantité comprise entre 20 et 50 % en poids, par rapport au poids de la composition d'adhésif fusible réactive à l'humidité.

11. Composition d'adhésif fusible réactive à l'humidité selon l'une quelconque des revendications précédentes, **caractérisée en ce que** la composition contient au moins un catalyseur organostannique, en particulier en une quantité comprise entre 0,1 et 2 % en poids, par rapport au poids de la composition d'adhésif fusible réactive à l'humidité.

12. Procédé pour le collage d'un premier support **S1** et d'un second support **S2**, comprenant les étapes
(i) chauffage jusqu'à une température de 40 - 120 °C, en particulier de 60 - 90 °C, d'une composition d'adhésif fusible réactive à l'humidité selon l'une quelconque des revendications 1 à 11 ;
(ii) application de la composition d'adhésif fusible réactive à l'humidité sur la surface d'un premier support **S1** ;
(iii) assemblage avec mise en contact de la surface du second support **S2** avec la composition d'adhésif fusible appliquée sur le premier support **S1**, en l'espace du délai d'utilisation ;
(iv) durcissement de la composition d'adhésif fusible au moyen d'eau ;
le premier support **S1** et le deuxième support **S2** étant en le même matériau ou en des matériaux différents.

13. Procédé pour le collage d'un premier support **S1** et d'un second support **S2**, comprenant les étapes
(i) chauffage jusqu'à une température de 40 - 120 °C, en particulier de 60 - 90 °C, d'une composition d'adhésif fusible réactive à l'humidité selon l'une quelconque des revendications 1 à 11 ;
(ii') application de la composition d'adhésif fusible réactive à l'humidité, chauffée, dans un interstice qui est formé au moins en partie par la surface d'un premier support **S1** et la surface d'un deuxième support **S2** et ainsi entrée en contact subséquente des surfaces du premier support **S1** et du second support **S2** au moyen d'adhésif ;
(iv) durcissement de la composition d'adhésif fusible au moyen d'eau ;
le premier support **S1** et le deuxième support **S2** étant en le même matériau ou en des matériaux différents.

14. Procédé selon la revendication 12 ou 13,
**caractérisé en ce que** le délai d'utilisation est compris entre 40 et 240 minutes, en particulier entre 40 et 180 minutes, de préférence entre 40 et 80 minutes.

15. Article collé, qui a été collé selon l'une quelconque des revendications 12 à 14.
